# EUROPEAN PATENT SPECIFICATION

(11) **EP 2 474 418 B1**
(45) Date of publication and mention of the grant of the patent: **23.04.2014**
(21) Application number: 09848757.2
(22) Date of filing: 31.08.2009
(51) Int. Cl.: B41J 2/01, B41J 3/407, B29C 67/00

(54) **THREE-DIMENSIONAL INKJET PRINTER**
DREIDIMENSIONALER TINTENSTRAHLDRUCKER
IMPRIMANTE À JET D'ENCRE EN TROIS DIMENSIONS

(43) Date of publication of application: 11.07.2012
(73) Proprietor: Mimaki Engineering Co., Ltd., Tomi-shi, Nagano 389-0512 (JP)
(72) Inventor: ONOZAWA Yoshiki, Tomi-shi Nagano 389-0512 (JP); SEKI Akifumi, Tomi-shi Nagano 389-0512 (JP); ONO Nobuyuki, Tomi-shi Nagano 389-0512 (JP)
(74) Representative: Gendron, Vincent Christian
(86) International application number: PCT/JP2009/065206
(87) International publication number: WO 2011/024312

(56) References cited:
- JP-A- 2006 187 877
- JP-A- 2007 008 110
- JP-A- 2007 008 110
- JP-A- 2009 184 118
- US-A1- 2006 139 385

## Description

### Technical Field

The present invention relates to a three-dimensional inkjet printer which carries out a printing on a surface of a medium of three-dimensional form by ejecting ink droplets from an inkjet head.

### Background Art

A general inkjet printer carries out a printing on a medium surface by ejecting ink droplets from an inkjet head onto a planar medium conveyed on a platen.

However, in recent years, a three-dimensional inkjet printer described in Patent Document 1 has been contrived from a demand to carry out a printing on a medium of three-dimensional form, too. The three-dimensional inkjet printer described in Patent Document 1 is one which prints an image on a medium surface by scanning with plural passes, wherein a pass position is specified by changing the inclination angle of a medium holding portion which holds a medium of three-dimensional form with respect to an inkjet head, and ink droplets are ejected from the inkjet head while rotating the medium holding portion with respect to the inkjet head, thereby printing one pass of image on the medium surface.

### Related Art Documents

### Patent Documents

Patent Document 1: JP-A-2007-008110

### Disclosure of the Invention

### Problem to be Solved by the Invention

Meanwhile, as the medium surface of three-dimensional form is curved, the distance away from the medium surface differs between the central portion and either end portion of the inkjet head. Because of this, when carrying out a printing with the three-dimensional inkjet printer described in Patent Document 1, the landing position of ink ejected from either end portion of the inkjet head deviates with respect to the landing position of ink droplets ejected from the central portion of the inkjet head, so that there has been a problem in that unevenness in print density occurs between passes.

Therefore, the invention has an object of providing a three-dimensional inkjet printer which can reduce unevenness in print density.

### Means for Solving the Problems

A three-dimensional inkjet printer according to the invention is defined in claim 1.

JP 2009 184118 shows an inkjet printer according to the preamble of claim 1.

According to the three-dimensional inkjet printer of the invention, it is possible to print an image on the medium surface by ejecting ink droplets from the inkjet head while rotating the medium with the B axis drive motor, and it is possible to change the position of a pass to be printed on the medium by revolving the medium with the A axis drive motor. Then, upon vibrations being generated from the vibration generator when ink droplets are being ejected from the inkjet head, the medium held by the medium holding portion vibrates, so that the landing positions of ink droplets ejected from the inkjet head deviate non-uniformly overall. As it is possible to make the deviation of dot positions visually inconspicuous by purposely causing the landing positions of ink droplets to deviate in this way, it is possible to reduce unevenness in print density.

Then, it is preferable that the vibration generator generates vibrations of a sub-scanning direction component. According to the three-dimensional inkjet printer, by vibrations of the sub-scanning direction component being generated from the vibration generator, the landing positions of ink droplets ejected from the inkjet head deviate non-uniformly in the sub-scanning direction overall. Because of this, as it is possible to make the spaces between the dots of ink droplets in adjacent passes unequal when printing images on the medium using plural passes, it is possible to reduce streaky connection unevenness which occurs in a connection of the printed images in the passes.

Also, the vibration generator generates vibrations of a main scanning direction component. According to the three-dimensional inkjet printer, by vibrations of the main scanning direction component being generated from the vibration generator, the landing positions of ink droplets ejected from the inkjet head deviate non-uniformly in the main scanning direction overall. Because of this, when printing an image on the medium in the same pass, it is possible to make the spaces between the dots of ink droplets across a connection in the printed image of the same pass unequal, so that it is possible to reduce streaky connection unevenness which occurs in the connection in the printed image of the same pass.

Then, it is preferable that the vibration generator makes the amplitude of generated vibrations equal to or less than a half dot of ink droplets ejected from the inkjet head. According to the three-dimensional inkjet printer, even in the event that adjacent ink droplets land on the medium surface, deviating in a direction in which they come close to each other, by making the amplitude of vibrations generated by the vibration generator equal to or less than the half dot of ink droplets, it is possible to prevent the dots of these ink droplets from overlapping, so that it is possible to suppress deterioration in image quality.

Also, it is preferable that the vibration generator causes the amplitude of generated vibrations to vary. According to the three-dimensional inkjet printer, as it is possible to irregularly distribute the landing positions of ink droplets by causing the amplitude of vibrations generated by the vibration generator to vary, it is possible to make the deviation of dot positions visually inconspicuous.

Also, it is preferable that the vibration generator causes the amplitude of generated vibrations to vary based on random number values. According to the three-dimensional inkjet printer, as it is possible to more irregularly distribute the landing positions of ink droplets by causing the amplitude of vibrations generated by the vibration generator to vary based on random number values, it is possible to make the deviation of dot positions visually inconspicuous. Advantage of the Invention

According to the invention, it is possible to reduce unevenness in print density.

### Brief Description of the Drawings

[Fig. 1] Fig. 1 is a front view of a three-dimensional inkjet printer according to an embodiment;
[Fig. 2] Fig. 2 is a sectional view along line II-II of Fig. 1;
[Fig. 3] Fig. 3 is a partial perspective view of the three-dimensional inkjet printer shown in Fig. 1;
[Fig. 4] Fig. 4 is a diagram showing a nozzle surface of an inkjet head;
[Fig. 5] Fig. 5 is a diagram showing a relationship between a medium M and the inkjet head when ejecting ink droplets while generating vibrations;
[Fig. 6] Fig. 6 is a diagram showing a condition in which vibrations of an X axis direction component are generated;
[Fig. 7] Fig. 7 is a diagram showing landing positions of ink droplets in the case of Fig. 6;
[Fig. 8] Fig. 8 is a diagram showing a condition in which vibrations of a Y axis direction component are generated; and
[Fig. 9] Fig. 9 is a diagram showing landing positions of ink droplets in the case of Fig. 8.

### Best Mode for Carrying Out the Invention

Hereafter, referring to the drawings, a detailed description of a preferred embodiment of a three-dimensional inkjet printer according to the invention will be given. In all the drawings, identical reference numerals and characters will be given to identical or equivalent portions.

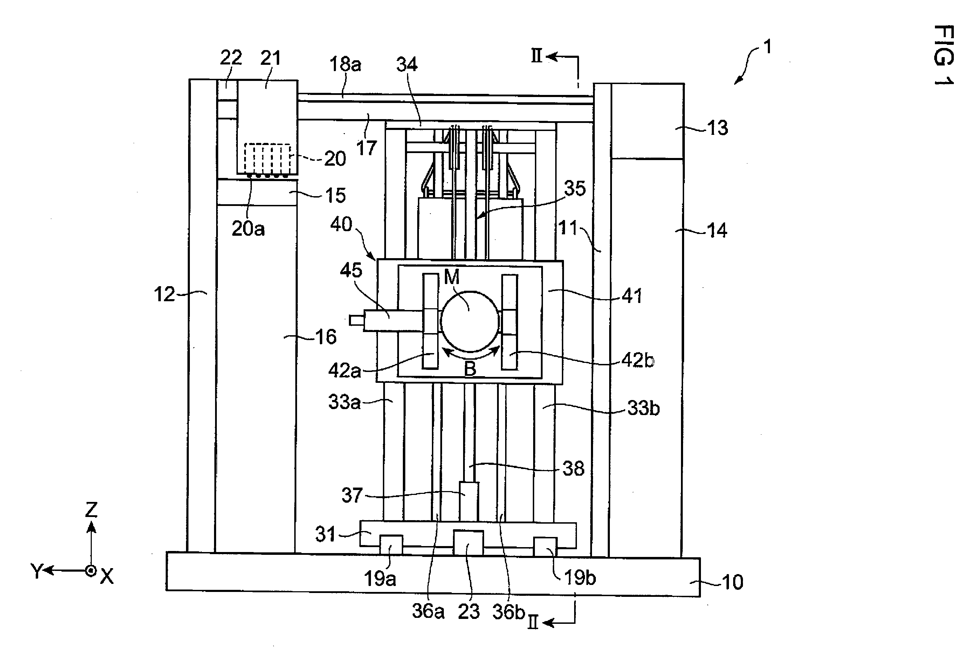

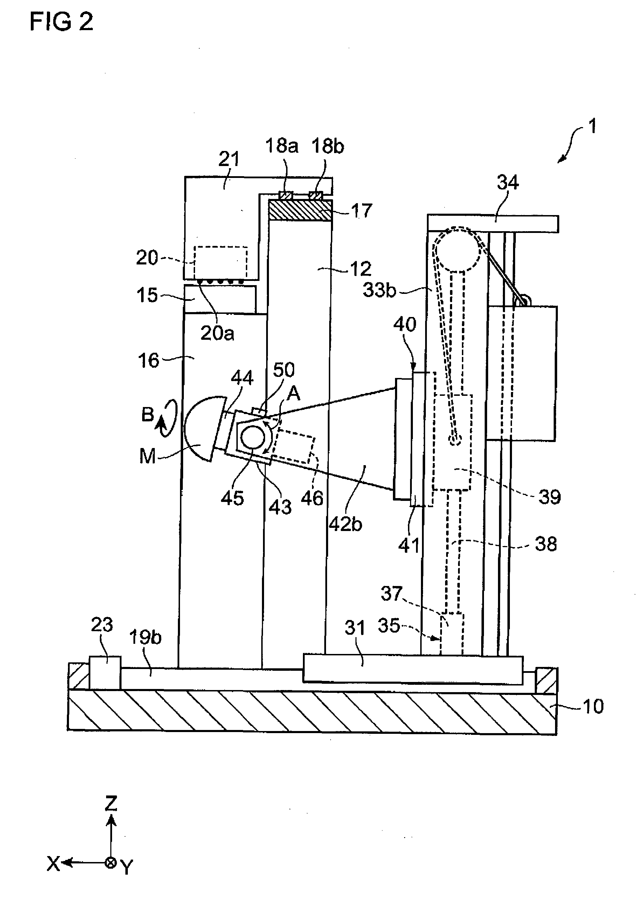

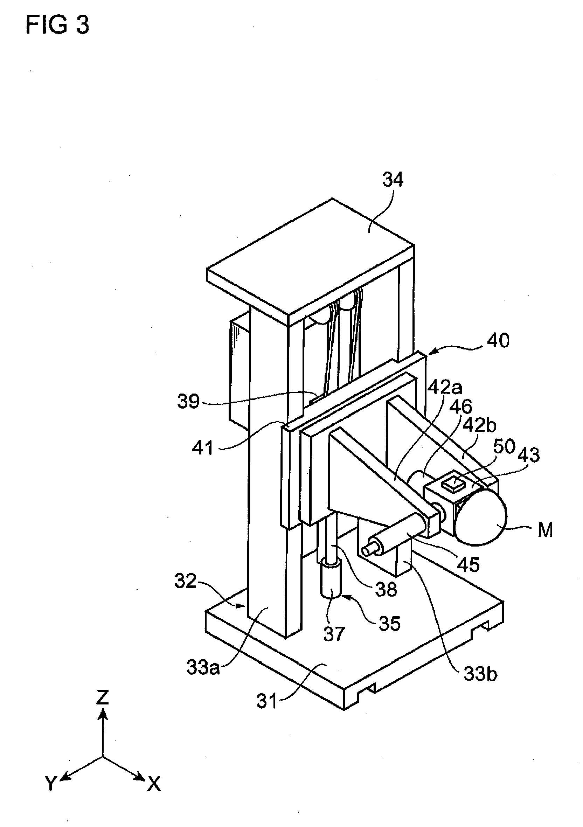

Fig. 1 is a front view of a three-dimensional inkjet printer according to the embodiment, Fig. 2 is a sectional view along line II-II of Fig. 1, and Fig. 3 is a partial perspective view of the three-dimensional inkjet printer shown in Fig. 1. In the embodiment, the left-right direction of Fig. 1 (the front-back direction of Fig. 2) is taken to be a Y axis direction, the front-back direction of Fig. 1 (the left-right direction of Fig. 2) is taken to be an X axis direction, and the up-down direction of Fig. 1 (the up-down direction of Fig. 2) is taken to be a Z axis direction.

As shown in Figs. 1 to 3, the three-dimensional inkjet printer 1 according to the embodiment performs a printing on a hemispherical medium M surface, wherein an inkjet head 20 which ejects ink and a medium holding portion 40 which holds a medium M of three-dimensional form are relatively moved, and ink is ejected from the inkjet head 20, thereby printing an image or the like on the surface of the medium M.

In the three-dimensional inkjet printer 1, a matched pair of support legs 11 and 12 disposed in the Y axis direction are provided to stand on a base 10 forming a foundation. A control unit 14 on which is mounted a control panel 13 which receives operator's instructions and operations is fixed to the support leg 11 disposed on the right side in the Y axis direction, and a maintenance station 15 which cleans the inkjet head 20 is fixed to the support leg 12 disposed on the left side in the Y axis direction.

The control unit 14 is a control unit which carries out a drive control for relatively moving the medium holding portion 40 and inkjet head 20, an ink ejection control of the inkjet head 20, a vibration generation control of a vibration generator 50, to be described hereafter, and the like. The control unit 14 is configured centered on a computer including, for example, a CPU, a ROM, and a RAM, wherein a predetermined control is realized by loading predetermined computer software onto the CPU or RAM, and causing it to operate under a control of the CPU.

A support beam 17 extending in the Y axis direction is suspended between the matched pair of support legs 11 and 12. Further, a pair of Y axis guide rails 18a and 18b extending in a direction of extension of the support beam 17 are disposed in parallel in the X axis direction on the upper surface of the support beam 17. Further, a head carriage 21 on which the inkjet head 20 is mounted is fitted on the pair of Y axis guide rails 18a and 18b so as to be movable in the Y axis direction.

The head carriage 21 is linked to a Y axis drive portion 22 attached to the support beam 17. The Y axis drive portion 22 is realized by a well-known mechanism configured of a Y axis drive motor which rotates about its axis in the Y axis direction, a ball screw linked to the Y axis drive motor, and a ball bearing which forms a bearing of the ball screw. Then, the Y axis drive motor is rotationally driven by the Y axis drive portion 22 being drive controlled by the control unit 14, and the head carriage 21 is guided by the pair of Y axis guide rails 18a and 18b to move in the Y axis direction.

The inkjet head 20 ejects inks of yellow, magenta, cyan, and black, or the like, printing a color image on the surface of the medium M held by the medium holding portion 40. For this reason, the inkjet head 20 is provided for each color of the inks ejected. Then, the individual inkjet heads 20 are each disposed in the lower end portion of the head carriage 21 so as to face the medium M held by the medium holding portion 40. Also, the lower surface of the inkjet head 20, forming a nozzle surface, forms a nozzle surface in which are aligned plural nozzles 20a which eject inks of yellow, magenta, cyan, and black, or the like.

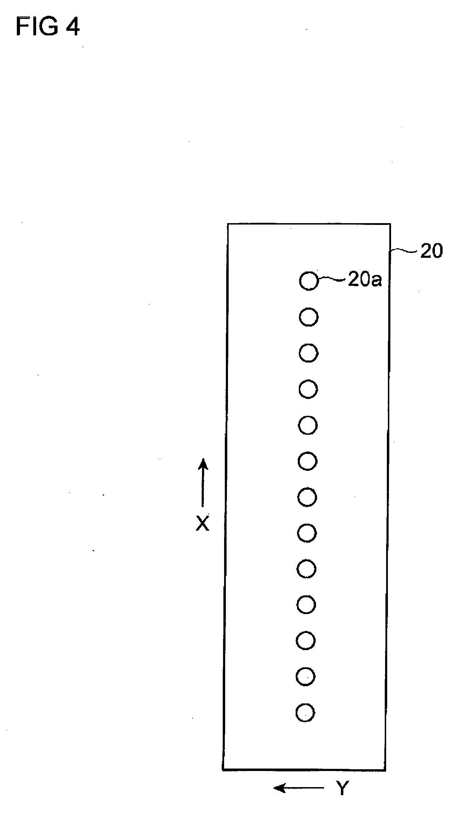

Fig. 4 is a diagram showing the nozzle surface of the inkjet head. As shown in Fig. 4, plural nozzles 20a aligned in a sub-scanning direction (the X axis direction) perpendicular to a main scanning direction (the Y axis direction) are provided in the inkjet head 20. All these nozzles 20a can eject ink droplets. However, as ink droplets ejected from the nozzles 20a disposed at either end of the inkjet head 20 are apt to cause a mist, and are also inferior in the accuracy of their landing positions, only predetermined nozzles 20a other than the nozzles 20a disposed at either end of the inkjet head 20 are made effective nozzles used for a printing.

Also, as shown in Figs. 1 to 3, a pair of X axis guide rails 19a and 19b extending in the X axis direction are disposed in parallel in the Y axis direction, between the pair of support legs 11 and 12, on the upper surface of the base 10. Further, an X table 31 for setting the medium holding portion 40 on is fitted on the pair of X axis guide rails 19a and 19b so as to be movable in the X axis direction.

The X table 31, being a table which relatively moves the medium holding portion 40 with respect to the inkjet head 20 in the X axis direction, is linked to an X axis drive portion 23 attached to the base 10. The X axis drive portion 23 is realized by a well-known mechanism configured of, for example, an X axis drive motor which rotates about its axis in the X axis direction, a ball screw linked to the X axis drive motor, and a ball bearing which forms a bearing of the ball screw. Then, the X axis drive motor is rotationally driven by the X axis drive portion 23 being drive controlled by the control unit 14, and the X table 31 is guided by the pair of X axis guide rails 19a and 19b to move in the X axis direction. Then, a Z axis support portion 32 extending in the Z axis direction is provided to stand on the X table 31.

The Z axis support portion 32 is a support member which supports the medium holding portion 40 so that the medium holding portion 40 can move up and down in the Z axis direction. For this reason, a pair of sidewall portions 33a and 33b provided to stand in the Z axis direction and a top portion 34 linking the upper surfaces of the pair of sidewall portions 33a and 33b are attached in the Z axis support portion 32. Further, an up and down mechanism 35 which moves up and down the medium holding portion 40 in the Z axis direction along the sidewall portions 33a and 33b is mounted between the pair of sidewall portions 33a and 33b.

The up and down mechanism 35 is configured of a Z axis drive motor 37 disposed between the pair of sidewall portions 33a and 33b and fixed to the X table 31, a ball screw 38 linked to the output shaft of the Z axis drive motor 37 and provided to stand in the Z axis direction, and a ball bearing 39 which forms a bearing of the ball screw 38 and is linked to the medium holding portion 40. Then, as well as the ball screw 38 rotating by the Z axis drive motor 37 being drive controlled by the control unit 14, the medium holding portion 40 moves up and down in the Z axis direction by the ball bearing 39 moving up and down in the Z axis direction with the rotation of the ball screw 38.

The medium holding portion 40 holds the medium M so that the medium M can rotate and revolve. For this reason, the medium holding portion 40 is configured of a Z table 41 attached to the ball bearing 39 of the up and down mechanism 35, a pair of arm portions 42a and 42b protruding from the Z table 41 in the X axis direction, an A axis rotating portion 43 rotatably mounted on the pair of arm portions 42a and 42b, and a chuck 44, rotatably mounted on the A axis rotating portion 43, which holds the medium M.

The pair of arm portions 42a and 42b, being disposed opposed in the Y axis direction, holds the A axis rotating portion 43 so that the A axis rotating portion 43 can swing. That is, a rotary shaft extending in the Y axis direction is mounted at the leading ends of the pair of opposed arm portions 42a and 42b, and the A axis rotating portion 43 is mounted on the rotary shaft. Then, the output shaft of an A axis drive motor 45 fixed to one arm portion 42a is linked to the rotary shaft. The A axis drive motor 45 is rotationally driven in an A axis direction which is a direction of rotation about the rotary shaft mounted on the pair of arm portions 42a and 42b. For this reason, by the A axis drive motor 45 being rotationally driven, the A axis rotating portion 43 swings in the A axis direction, and the medium M held by the chuck 44 revolves around the rotary shaft of the A axis rotating portion 43, so that it is possible to move the surface of the medium M facing the inkjet head 20 in the X axis direction which is the sub-scanning direction.

The A axis rotating portion 43 holds the chuck 44 so that the chuck 44 can rotate. That is, a B axis drive motor 46 which is rotationally driven, with an axis in a direction perpendicular to the rotary shaft of the A axis rotating portion 43 as a rotation axis, in a B axis direction which is a direction of rotation about the rotation axis is mounted on the A axis rotating portion 43. Further, the chuck 44 holding the medium M is mounted on the output shaft of the B axis drive motor 46. For this reason, by the B axis drive motor 46 being rotationally driven, as well as the chuck 44 rotating in the B axis direction, the medium M held by the chuck 44 also rotates about the rotation axis of the chuck 44, so that it is possible to move the surface of the medium M facing the inkjet head 20 in the Y axis direction which is the main scanning direction.

The vibration generator 50 which applies vibrations to the medium holding portion 40 is mounted on the medium holding portion 40.

The vibration generator 50 generates vibrations of an X axis direction component and Y axis direction component, and is configured of, for example, a vibration mechanism wherein an eccentric weight (not shown) is rotated by a motor (not shown) . The vibration generator 50, being fixed to the A axis rotating portion 43 of the medium holding portion 40 by a screw or the like, is configured integrally with the A axis rotating portion 43 which is one portion of the medium holding portion 40. For this reason, a configuration is such that, when the vibration generator 50 vibrates, the A axis rotating portion 43 vibrates in synchronism with the vibration, and furthermore, the medium M vibrates via the chuck 44 with the vibration of the A axis rotating portion 43. Also, the vibration generator 50 can cause the amplitude of generated vibrations to vary based on random number values. Specifically, with the amplitude of half the dot diameter (the half dot width) of ink droplets ejected from the inkjet head 20 as a maximum amplitude, the amplitude is optionally caused to vary between 0 (zero) and the half dot width. In the embodiment, for the sake of simplicity, a description will be given with the amplitude caused to vary between two values, 0 and the half dot width. Random number values can be generated by a random number generator (not shown) or the like using a predetermined formula.

Next, a description of an action of the three-dimensional inkjet printer 1 according to the embodiment will be given. An action of the three-dimensional inkjet printer 1, to be described hereafter, is executed by a control by the control unit 14.

Firstly, when the medium M is mounted on the medium holding portion 40, the X axis drive portion 23, Y axis drive portion 22, Z axis drive portion 37, A axis drive motor 45, and B axis drive motor 46 are drive controlled. To describe specifically, firstly, the X axis drive portion 23 and Y axis drive portion 22 are driven to dispose the medium M immediately below the inkjet head 20 in the Z axis direction. Also, as well as the B axis drive motor 46 being driven to rotate the medium M in the B axis direction, the A axis drive motor 46 and Z axis drive motor 37 are driven to cause a printing position on the medium M surface to be disposed facing the nozzle surface of the inkjet head 20. At this time, the inkjet head 20 and medium M are moved, while maintaining the gap between the medium M and inkjet head 20 approximately constant, in such a way that the printing position on the medium M surface is approximately parallel to the nozzle surface of the inkjet head 20 (in such a way that the normal of the printing position on the medium M surface approximately coincides with the direction of ejection of ink droplets ejected from the nozzles 20a of the inkjet head 20). By the B axis drive motor 46 being driven to rotate the medium M in the B axis direction, the surface of the medium M facing the inkjet head 20 moves in the Y axis direction which is the main scanning direction. Also, by the A axis drive motor 46 being driven to revolve the medium M in the A axis direction, and the Z axis drive motor 37 being driven to move the medium M in the Z axis direction, the surface of the medium M facing the inkjet head 20 moves in the X axis direction which is the sub-scanning direction.

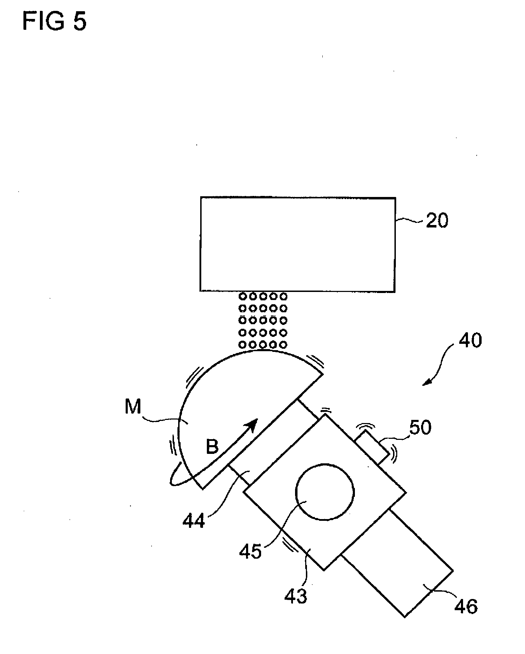

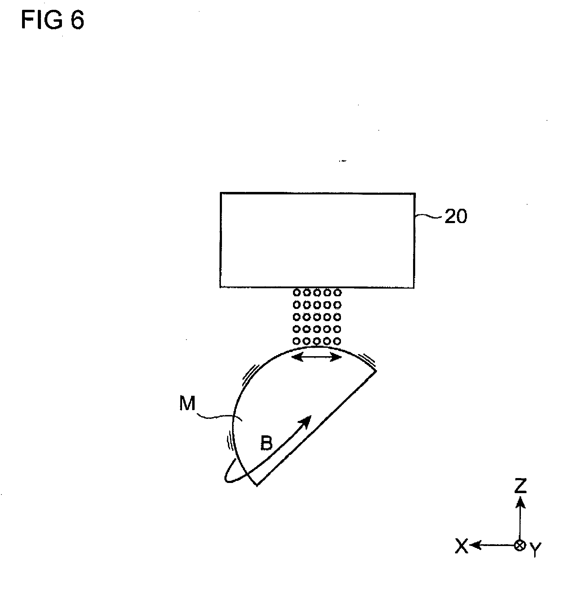

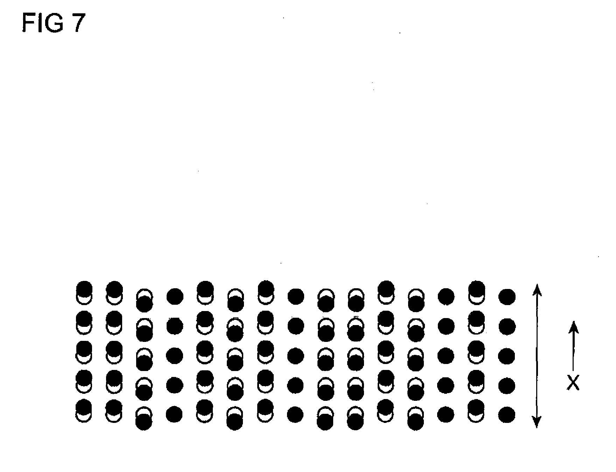

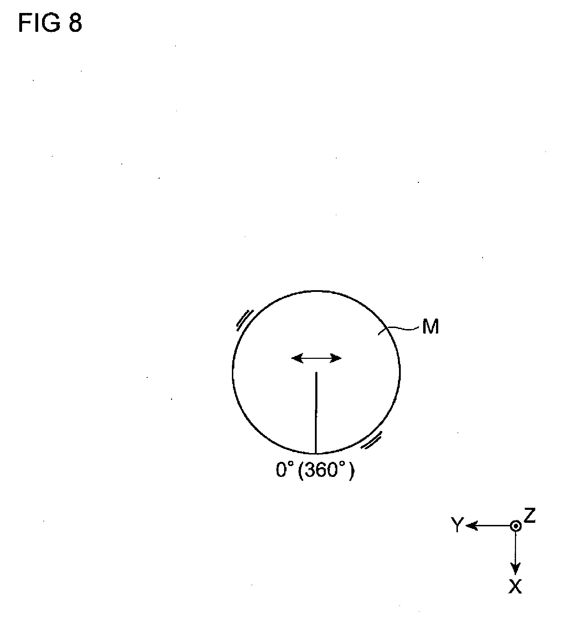

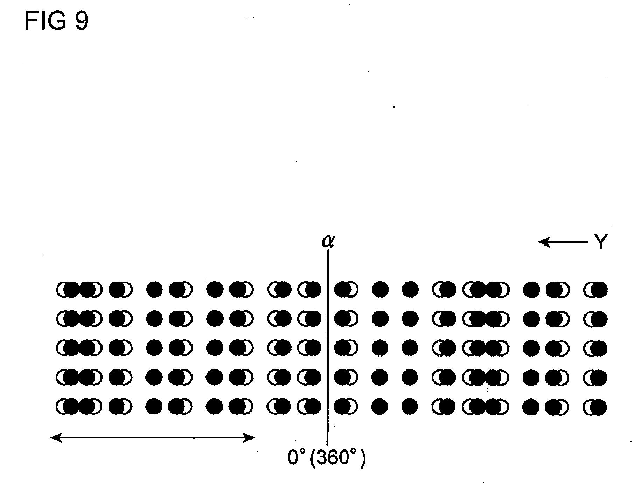

Then, in the embodiment, along with the heretofore described drive control, an ejection control by the inkjet head 20 is carried out while carrying out a vibration generation control by the vibration generator 50. A specific description will be given referring to Figs. 5 to 9. Fig. 5 is a diagram showing a relationship between the medium M and inkjet head when ejecting ink droplets while generating vibrations, Fig. 6 is a diagram showing a condition in which vibrations of the X axis direction component are generated, Fig. 7 is a diagram showing landing positions (dot positions) of ink droplets in the case of Fig. 6, Fig. 8 is a diagram showing a condition in which vibrations of the Y axis direction component are generated, and Fig. 9 is a diagram showing landing positions (dot positions) of ink droplets in the case of Fig. 8. Figs. 5 to 9 show a case in which one pass is configured by five dots with five continuous nozzles 20a as the effective nozzles.

In the ejection control, firstly, effective nozzles to be used for a printing are selected from among the plural nozzles 20a provided in the inkjet head 20. Then, during a period of time for which the medium M rotates once or plural times, ink droplets are ejected from the selected effective nozzles, printing an image of a predetermined pass width on the medium M. When the rotation angle position of the medium M at which the printing starts is taken to be 0°, the boundary between the position of 0° and the position of 360° is a connection in the printed image.

Then, as shown in Fig. 5, vibrations are generated from the vibration generator 50 when ink droplets are being ejected from the inkjet head 20. At this time, the vibration generator 50, while causing the amplitude to vary to a width selected based on random number values between two values, 0 and the half dot width, generates vibrations including the X axis direction component and Y axis direction component. By doing so, the medium M vibrates in the X axis direction and Y axis direction with the vibrations generated by the vibration generator 50, and the landing positions of the ink droplets ejected from the inkjet head 20 deviate in the X axis direction and Y axis direction.

Herein, referring to Figs. 6 and 7, a description of a case in which vibrations of the X axis component are generated from the vibration generator 50 will be given. As shown in Fig. 6, when vibrations of the X axis direction component are generated by the vibration generator 50, the medium M vibrates in the X axis direction. By doing so, at each timing of ejection of ink droplets ejected from the inkjet head 20, the ink droplets land on the medium M surface, deviating in the X axis direction (refer to Fig. 7), and the dot positions on the medium M surface deviate non-uniformly in a direction of adjacent previous and next passes overall. Because of this, a bleeding occurs in the boundary between adjacent passes, and the print density between the passes is made uniform.

Next, referring to Figs. 8 and 9, a description of a case in which vibrations of the Y axis direction component are generated from the vibration generator 50 will be given. As shown in Fig. 8, when vibrations of the Y axis direction component are generated by the vibration generator 50, the medium M vibrates in the Y axis direction. By doing so, at each timing of ejection of ink droplets ejected from the inkjet head 20, the ink droplets land on the medium M surface, deviating in the Y axis direction (refer to Fig. 9), and the dot positions on the medium M surface deviate in the direction of a connection α in an image of a pass overall. Because of this, a bleeding occurs in the connection α in the image of the pass, and the density of the printed image straddling the connection α is made uniform.

When one pass of image is printed on the medium M surface by doing so, the A axis drive motor 46 and Z axis drive motor 37 are driven to cause the printing position of a next pass to be disposed facing the nozzle surface of the inkjet head 20. Subsequently, one pass of image is printed, and the heretofore described processing action is repeated until printing of all images are completed.

In this way, according to the three-dimensional inkjet printer 1 of the embodiment, it is possible to print an image of each pass on the medium M surface by ejecting ink droplets from the inkjet head 20 while rotating the medium M by driving the B axis drive motor 46, and it is possible to change the position of a pass to be printed on the medium M surface by changing the height of the medium M by driving the Z axis drive motor 37, and revolving the medium M by driving the A axis drive motor 45 and changing the inclination angle of the medium M. Then, upon vibrations being generated from the vibration generator 50 when ink droplets are being ejected from the inkjet head 20, the medium M held by the medium holding portion 40 vibrates, so that the landing positions of ink droplets ejected from the inkjet head 20 deviate non-uniformly overall. As it is possible to make the deviation of dot positions visually inconspicuous by purposely causing the landing positions of ink droplets to deviate, it is possible to reduce unevenness in print density.

Further, by vibrations of the sub-scanning direction (X axis direction) component being generated from the vibration generator 50, the landing positions of ink droplets ejected from the inkjet head 20 deviate non-uniformly in the sub-scanning direction (X axis direction) overall. Because of this, as it is possible to make the spaces between the dots of ink droplets in adjacent passes unequal when printing images on the medium M using plural passes, it is possible to reduce streaky connection unevenness which occurs in a connection of the printed images in the passes.

Also, by vibrations of the main scanning direction (Y axis direction) component being generated from the vibration generator 50, the landing positions of ink droplets ejected from the inkjet head 20 deviate non-uniformly in the main scanning direction (Y axis direction) overall. Because of this, when printing an image on the medium M in the same pass, it is possible to make the spaces between the dots of ink droplets across the connection α in the printed image of the same pass unequal, so that it is possible to reduce streaky connection unevenness which occurs in the connection α in the printed image of the same pass.

Then, even in the event that adjacent ink droplets land on the medium surface, deviating in a direction in which they come close to each other, by making the amplitude of vibrations generated by the vibration generator 50 equal to or less than the half dot of ink droplets, it is possible to prevent the dots of these ink droplets from overlapping, so that it is possible to suppress deterioration in image quality.

Also, as it is possible to irregularly distribute the landing positions of ink droplets by causing the amplitude of vibrations generated by the vibration generator 50 to vary, it is possible to make the deviation of dot positions visually inconspicuous.

In this case, as it is possible to more irregularly distribute the landing positions of ink droplets by causing the amplitude of vibrations generated by the vibration generator 50 to vary based on random number values, it is possible to make the deviation of dot positions visually inconspicuous.

Heretofore, a description of a preferred embodiment of the invention has been given, but the invention is not limited to the heretofore described embodiment. For example, in the heretofore described embodiment, the vibration generator 50 has been described as one which causes the amplitude to vary between two values, but the amplitude may be caused to vary in stages by further subdividing the section between 0 and the half dot width, or the amplitude may be caused to vary linearly between 0 and the half dot width.

Also, in the heretofore described embodiment, the vibration generator 50 has been described as one which causes the amplitude of generated vibrations to vary based on random number values, but the amplitude of generated vibrations may be caused to vary based on a predetermined formula, or the amplitude of generated vibrations may be fixed to a certain width. In this case, as it is possible to cause the landing positions of ink droplets ejected from each nozzle 20a of the inkjet head 20 to deviate overall by shifting the frequency of the amplitude from the timing of ejection of ink droplets, it is possible to achieve advantages the same as those of the heretofore described embodiment.

Also, in the heretofore described embodiment, the vibration generator 50 has been described as one which generates vibrations when ink droplets are being ejected from the inkjet head 20, but vibrations may also be generated when no ink droplets are being ejected from the inkjet head 20.

### Industrial Applicability

The invention can be utilized as a three-dimensional inkjet printer which carries out a printing on a surface of a medium of three-dimensional form by ejecting ink droplets from an inkjet head. [0052]
- 1: Three-dimensional inkjet printer
- 10: Base
- 11, 12: Support leg
- 13: Control panel
- 14: Control unit
- 15: Maintenance station
- 17: Support beam
- 18a, 18b: Y axis guide rail
- 19a, 19b: X axis guide rail
- 20: Inkjet head
- 20a: Nozzle
- 21: Head carriage
- 22: Y axis drive portion
- 23: X axis drive portion
- 31: X table
- 32: Z axis support portion
- 33a, 33b: Sidewall portion
- 34: Top portion
- 35: Up and down mechanism
- 37: Z axis drive motor
- 38: Ball screw
- 39: Ball bearing
- 40: Medium holding portion
- 41: Z table
- 42a, 42b: Arm portion
- 43: A axis rotating portion
- 44: Chuck
- 45: A axis drive motor
- 46: B axis drive motor
- 50: Vibration generator
- M: Medium

## Claims

1. A three-dimensional inkjet printer (1) which, while relatively moving a medium holding portion (40) which holds a medium (M) of three-dimensional form and an inkjet head (20), ejects ink droplets onto a surface of the medium (M) from the inkjet head (20), thus carrying out a printing on the medium surface, the printer including:
a B axis drive portion which rotates the medium (M) and moves the medium surface facing the inkjet head (20) in a main scanning direction;
an A axis drive portion which revolves the medium (M) and moves the medium surface facing the inkjet head (20) in a sub-scanning direction perpendicular to the main scanning direction;
**characterized in that** the three-dimensional inkjet printer (1) further comprises a vibration generator (50) which generates vibrations and vibrates the medium when ink droplets are being ejected from the inkjet head, and that the vibration generator (50) generates vibrations of a main scanning direction component.

2. The three-dimensional inkjet printer according to claim 1, wherein
the vibration generator (50) generates vibrations of a sub-scanning direction component.

3. The three-dimensional inkjet printer according to claim 1 or 2, wherein
the vibration generator makes the amplitude of generated vibrations equal to or less than a half dot of ink droplets ejected from the inkjet head.

4. The three-dimensional inkjet printer according to any one of claims 1 to 3, wherein
the vibration generator causes the amplitude of generated vibrations to vary.

5. The three-dimensional inkjet printer according to any one of claims 1 to 3, wherein
the vibration generator causes the amplitude of generated vibrations to vary based on random number values.

## Patentansprüche

1. Dreidimensionaler Tintenstrahldrucker (1), der, während er einen Mediumhalteabschnitt (40), der ein Medium (M) von dreidimensionaler Form hält, und einen Tintenstrahlkopf (20) relativ bewegt, Tintentröpfchen auf eine Fläche bzw. Oberfläche des Mediums (M) aus dem Tintenstrahlkopf (20) ausstößt und somit ein Drucken auf die Mediumfläche bzw. -oberfläche durchführt, wobei der Drucker enthält:
einen B-Achsenantriebs- bzw. -treiberabschnitt, der das Medium (M) dreht bzw. rotiert und die Mediumfläche bzw. -oberfläche, die dem Tintenstrahlkopf (20) zugewandt ist, in einer Hauptabtastrichtung bewegt;
einen A-Achsenantriebs- bzw. -treiberabschnitt, der das Medium (M) dreht bzw. revolviert und die Mediumfläche bzw. -oberfläche, die dem Tintenstrahlkopf (20) zugewandt ist, in einer Unter- bzw. Teilabtastrichtung senkrecht zu der Hauptabtastrichtung bewegt;
**dadurch gekennzeichnet, dass** der dreidimensionale Tintenstrahldrucker (1) ferner einen Vibrationsgenerator (50) umfasst, der Vibrationen erzeugt und das Medium vibrieren lässt, wenn Tintentröpfchen aus dem Tintenstrahlkopf ausgestoßen werden, und dass der Vibrationsgenerator (50) Vibrationen einer Hauptabtastrichtungskomponente erzeugt.

2. Dreidimensionaler Tintenstrahldrucker nach Anspruch 1, wobei der Vibrationsgenerator (50) Vibrationen einer Unter- bzw. Teilabtastrichtungskomponente erzeugt.

3. Dreidimensionaler Tintenstrahldrucker nach Anspruch 1 oder 2, wobei der Vibrationsgenerator die Amplitude von erzeugten Vibrationen gleich einem oder weniger als einen halben Punkt von Tintentröpfchen macht, die aus dem Tintenstrahlkopf ausgestoßen werden.

4. Dreidimensionaler Tintenstrahldrucker nach einem der Ansprüche 1 bis 3, wobei der Vibrationsgenerator bewirkt, dass die Amplitude von erzeugten Vibrationen variiert.

5. Dreidimensionaler Tintenstrahldrucker nach einem der Ansprüche 1 bis 3, wobei der Vibrationsgenerator bewirkt, dass die Amplitude von erzeugten Vibrationen basierend auf Zufallszahlwerten varüert.

## Revendications

1. Imprimante à jet d'encre tridimensionnelle (1) qui, tout en déplaçant relativement une partie de maintien de support (40), qui maintien un support (M) d'une forme tridimensionnelle, et une tête à jet d'encre (20), éjecte des gouttelettes d'encre sur une surface du support (M) à partir de la tête à jet d'encre (20), réalisant ainsi une impression sur la surface de support, l'imprimante comportant :
une partie d'entraînement d'axe B qui fait tourner le support (M) et déplace la surface de support face à la tête à jet d'encre (20) suivant une direction de balayage principal ;
une partie d'entraînement d'axe A qui fait tourner le support (M) et déplace la surface de support face à la tête à jet d'encre (20) suivant une direction de balayage secondaire perpendiculaire à la direction de balayage principal ;
**caractérisée en ce que** l'imprimante à jet d'encre tridimensionnelle(1) comprend, en outre, un générateur de vibration (50) qui produit des vibrations et fait vibrer le support lorsque les gouttelettes d'encre sont éjectées à partir de la tête à jet d'encre, et **en ce que** le générateur de vibration (50) génère des vibrations suivant une composante de la direction de balayage principal.

2. Imprimante tridimensionnelle à jet d'encre selon la revendication 1, dans laquelle
le générateur de vibration (50) génère des vibrations suivant une composante de la direction de balayage secondaire.

3. Imprimante tridimensionnelle à jet d'encre selon la revendication 1 ou 2, dans laquelle
les vibrations produites par le générateur de vibration présentent une amplitude inférieure ou égale à la moitié d'un point des gouttelettes d'encre éjectées par la tête à jet d'encre.

4. Imprimante tridimensionnelle à jet d'encre selon l'une quelconque des revendications 1 à 3, dans laquelle
le générateur de vibration fait varier l'amplitude des vibrations produites.

5. Imprimante tridimensionnelle à jet d'encre selon l'une quelconque des revendications 1 à 3, dans laquelle
le générateur de vibration fait varier l'amplitude des vibrations produites sur la base de valeurs issues de nombres aléatoires.
